# EUROPÄISCHE PATENTSCHRIFT

(11) **EP 0 886 043 B1**
(45) Veröffentlichungstag und Bekanntmachung des Hinweises auf die Patenterteilung: **11.12.2002**
(21) Anmeldenummer: 98106190.6
(22) Anmeldetag: 04.04.1998
(51) Int. Cl.: F01N 3/20, B01D 53/94, B05B 7/04

(54) **Gemischabgabevorrichtung**
Mixture delivery device
Dispositif de distribution d'un mélange

(30) Priorität: 21.06.1997 DE 19726392
(43) Veröffentlichungstag der Anmeldung: 23.12.1998
(73) Patentinhaber: ROBERT BOSCH GMBH, 70442 Stuttgart (DE)
(72) Erfinder: Brenner, Frank, 71642 Ludwigsburg (DE); Weber, Georg, 74336 Brackenheim (DE)

(56) Entgegenhaltungen:
- EP-A- 0 537 968
- EP-A- 0 586 912
- DE-A- 4 203 807
- US-A- 5 431 893
- US-A- 5 605 042
- US-A- 5 606 856

## Beschreibung

### Stand der Technik

Die Erfindung geht aus von einer Gemischabgabevorrichtung nach der Gattung des Anspruchs 1. Es besteht auch weiterhin die Forderung nach einer Verringerung schädlicher Abgasbestandteile von Brennkraftmaschinen. Zur Stickoxid-Reduktion in den Abgasen von Brennkraftmaschinen, insbesondere gemischverdichtenden selbstzündenden Brennkraftmaschinen, wird eine Harnstoff-Wasser-Lösung vor einen Katalysator in das Abgassystem der Brennkraftmaschine eingebracht. Im Katalysator wird der eingebrachte Harnstoff durch chemische Reaktionen in Ammoniak überführt, welcher die Reduktion von Stickoxiden bewirkt. Bei der bekannten Gemischabgabevorrichtung nach der EP-A-0 537 968 ist in das Abgassystem über eine abgewinkelte Gemischführungsleitung ein mittels einem dosierenden Gemischzumeßventil zugemessenes Luft-Reduktionsmittel-Gemisch abgebbar. Dabei besteht jedoch die Gefahr, daß Abgas in die Gemischführungsleitung strömt und darin zu Ablagerungen führt. Bekannt ist ebenfalls durch die DE-A-42 03 807 eine Vorrichtung, bei der mittels einer sich über den gesamten Querschnitt des Abgassystems erstreckenden kegelförmigen Drallscheibe Abgas tangential auf eine von einer Zerstäuberdüse abgegebene Harnstofflösung geleitet wird und eine gleichmäßige Verteilung der Harnstofflösung bewirkt. Eine weitere Gemischabgabevorrichtung ist bekannt (EP 0 586 912 A2), die jedoch nur zu einer Gemischeinblasung in einen Bereich des Abgassystems geeignet ist, in dem das Abgassystem angewinkelt verläuft. Bekannt ist ebenfalls eine Gemischabgabevorrichtung (US-A-5 606 856), bei der zwischen einer Förderleitung und einer Verdrängerpumpe ein zu der Förderleitung hin öffnendes Rückschlagventil vorgesehen ist.

### Vorteile der Erfindung

Die Gemischabgabevorrichtung mit den kennzeichnenden Merkmalen des Anspruchs 1 hat demgegenüber den Vorteil, daß sie universeller einsetzbar ist und auch in Bereichen von Abgassystemen angeordnet werden kann, in denen das Abgassystem nicht abgewinkelt verläuft, und dabei eine optimale Position im axialen Abstand gegenüber einem Katalysator frei eingehalten werden kann. Die Anordnung eines in Richtung zu der Gemischführungsleitung hin öffnenden Rückschlagventiles zwischen der Gemischführungsleitung und dem Gemischzumeßventil bringt den Vorteil mit sich, daß bei nicht strömendem Gemisch verhindert wird, daß Abgas zum Gemischzumeßkanal gelangt. Eine vorteilhafte Beeinflussung der Abgasströmung im Bereich des Sprühkopfes ist durch die Anordnung eines konzentrisch zur Längsachse auf dem zweiten Abschnitt kegelförmig ausgebildeten Leitkörpers möglich, der sich mit seinem größeren Durchmesser nach stromabwärts erstreckt.

Durch die in dem Unteranspruch aufgeführte Maßnahme ist eine vorteilhafte Weiterbildung und Verbesserung der im Anspruch 1 angegebenen Gemischabgabevorrichtung möglich.

Besonders vorteilhaft ist es, den Sprühkopf mit einer konzentrisch zur Längsachse des Abgassystems verlaufenden drosselnden Ausblaseöffnung zu versehen, deren Querschnitt geringer als der Querschnitt des Gemischführungskanales ist, wodurch eine kegelförmige Einblasung des Gemisches in das vorbeiströmende Abgas über den Querschnitt des Abgassystems erfolgt.

### Zeichnung

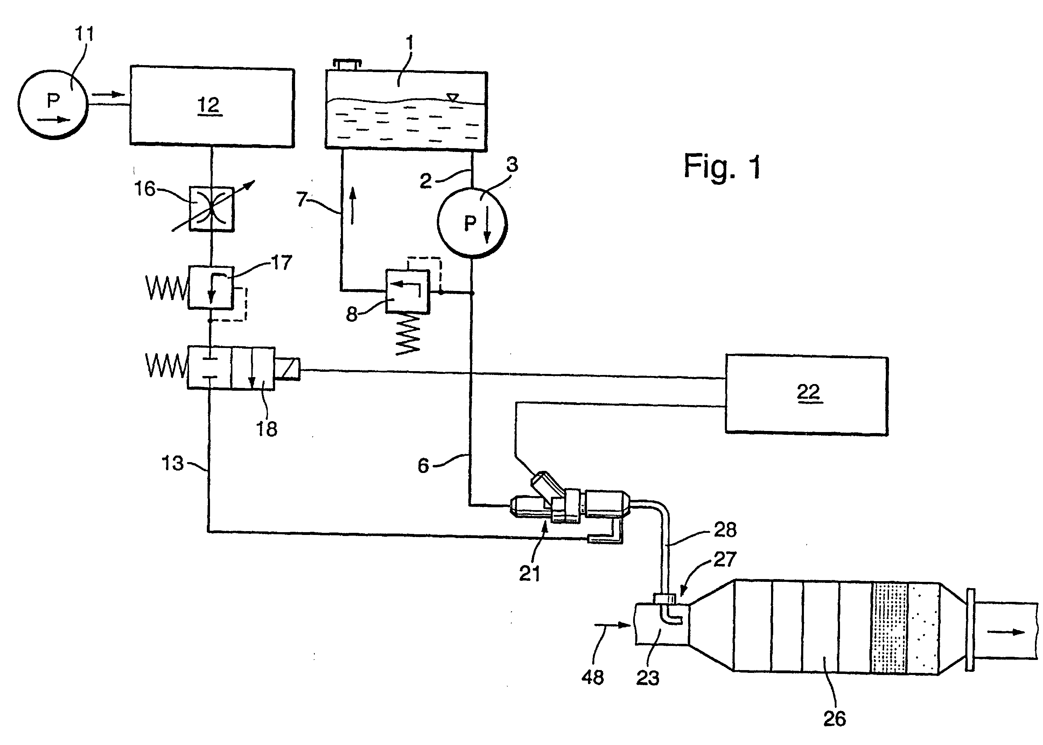

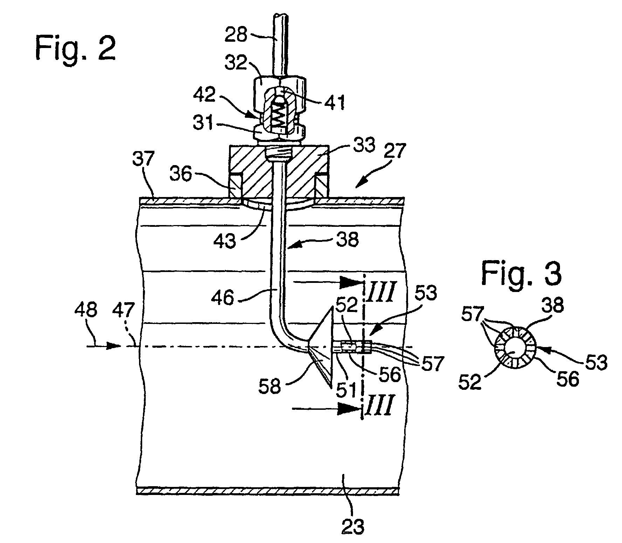

Ein Ausführungsbeispiel der Erfindung ist in der Zeichnung vereinfacht dargestellt und in der nachfolgenden Beschreibung näher erläutert. Es zeigen Figur eine schematisch dargestellte Harnstoff-Dosiereinrichtung für ein Abgassystem einer Brennkraftmaschine mit einer erfindungsgemäß ausgebildeten Gemischabgabevorrichtung, Figur 2 ein erfindungsgemäß ausgebildetes Ausführungsbeispiel einer Gemischabgabevorrichtung zur Verwendung in einer Harnstoff-Dosiereinrichtung nach Figur 1, Figur 3 einen Schnitt entlang der Linie III-III in Figur 2,

### Beschreibung der Ausführungsbeispiele

Bei der Harnstoff-Dosiereinrichtung zur Abgabe einer Harnstoff-Wasser-Lösung vor einen Katalysator im Abgassystem einer Brennkraftmaschine, insbesondere einer gemischverdichtenden selbstzündenden Brennkraftmaschine, nach der Figur 1 ist ein Harnstoff-Wasser-Tank 1 vorgesehen, von dem aus eine Saugleitung 2 zur Saugseite einer druckerzeugenden Harnstofförderpumpe 3 führt. Die Harnstofförderpumpe 3 fördert eine Harnstoff-Wasser-Lösung in eine druckseitig angeschlossene Harnstoffdruckleitung 6. Von der Harnstoffdruckleitung 6 führt eine Entlastungsleitung 7 zurück zum Harnstoff-Wasser-Tank 1. In der Entlastungsleitung 7 ist ein Druckbegrenzungsventil 8 angeordnet, durch das der Druck in der Harnstoffdruckleitung 6 beispielsweise auf 3 bar begrenzt wird.

Die Harnstoff-Dosiereinrichtung weist weiterhin eine Luftpumpe 11 auf, die Druckluft mit beispielsweise 7 bar in einen Luftspeicher 12 fördert. Mit dem Luftspeicher 12 ist ebenfalls eine Druckluftleitung 13 verbunden, in der in Reihe ein verstellbares Drosselventil 16, ein Druckregelventil 17 und ein elektromagnetisch betätigbares 2/2-Wegeventil 18 angeordnet sind. Das Druckregelventil 17 regelt den stromabwärtigen Druck in der Druckluftleitung 13 beispielsweise auf 1 bar. Das 2/2-Wegeventil 18 hat eine Sperrstellung, in der es in Figur 1 dargestellt ist, und eine Durchlaßstellung.

Die Harnstoffdruckleitung 6 und die Druckluftleitung 13 sind an ein Gemischzumeßventil 21 angeschlossen, das elektromagnetisch betätigbar ist und in dem eine Mischung der Harnstoff-Wasser-Lösung mit der Druckluft erfolgt. Die Ansteuerung des 2/2-Wegeventils 18 und des Gemischzumeßventils 21 erfolgt durch ein elektronisches Steuergerät 22. Das mittels der Druckluft gleichmäßig und fein aufbereitete Gemisch mit der Harnstoff-Wasser-Lösung wird in ein Abgassystem 23 stromaufwärts eines Katalysators 26 bekannter Bauart mittels einer Gemischabgabevorrichtung 27 eingeblasen. Der in den Katalysator 26 eingebrachte Harnstoff wird durch chemische Reaktionen in Ammoniak überführt, welcher die Reduktion der Stickoxide im Abgas bewirkt.

Die Figur 2 zeigt eine erfindungsgemäß ausgebildete Gemischabgabevorrichtung 27 gemäß einem ersten Ausführungsbeispiel. Dabei ist zwischen dem Gemischzumeßventil 21, für das ein bei der Benzineinspritzung bekanntes methanolfestes Einspritzventil verwendet werden kann, beispielsweise ein durch die DE 34 11 537 A1 bekanntes Einspritzventil, und der Gemischabgabevorrichtung 27 eine Verbindungsleitung 28 vorgesehen, die es ermöglicht, das Gemischzumeßventil 21 mit ausreichender Entfernung vom Abgassystem 23 anzuordnen, um das Gemischzumeßventil 21 thermisch von dem Abgassystem 23 zu entkoppeln. Die Gemischabgabevorrichtung 27 weist einen Eingangsstutzen 31 auf, der mit einem ersten Außengewinde versehen ist, mit dem eine Überwurfmutter 32 verschraubt ist, die mit der Verbindungsleitung 28 gekoppelt ist. Weiterhin hat der Eingangsstutzen 31 ein zweites Außengewinde, das in einen Haltekörper 33 eingeschraubt ist. Der Haltekörper 33 ist in einen Halterahmen 36 eingesetzt und mit diesem verbunden, beispielsweise mittels einer Schraubverbindung. Der Halterahmen 36 ist mit der äußeren Oberfläche der Wandung 37 des Abgassystems 23 stromaufwärts des Katalysators 26 verbunden. In dem Haltekörper 33 ist ausgerichtet auf den Eingangsstutzen 31 eine Gemischführungsleitung 38 eingesetzt, die über einen Durchgangskanal 41 im Eingangsstutzen 31 mit der Verbindungsleitung 28 in Strömungsverbindung steht. Dabei ist in dem Eingangsstutzen 31 ein Rückschlagventil 42 angeordnet, das in Richtung zur Gemischführungsleitung 38 hin öffnet und ein Einströmen von Abgas in die Verbindungsleitung 28 und damit zum Gemischzumeßventil 21 verhindert, wenn das Gemischzumeßventil 21 nicht betätigt wird. Im Bereich des Halterahmens 36 hat die Wandung 37 des Abgassystems 23 eine Durchstecköffnung 43, durch die die Gemischführungsleitung 38 mit einem ersten Abschnitt 46 quer zu einer Längsachse 47 in das Abgassystem 23 ragt. Ein Pfeil 48 deutet die Abgasströmungsrichtung entlang der Längsachse 47 an. Der erste Abschnitt 46 der Gemischführungsleitung 38 steht mit einem zweiten Abschnitt 51 in Verbindung, der konzentrisch zur Längsachse 47 verläuft und sich in Richtung der Abgasströmung 48 erstreckt. Die Gemischführungsleitung 38 weist einen Gemischführungskanal 52 auf und endet im Abgassystem 23 am zweiten Abschnitt 51 mit einem Sprühkopf 53. Bei dem Ausführungsbeispiel nach Figur 2 und dem in Figur 3 in geändertem Maßstab dargestellten Schnitt III-III in Figur 2 weist der Sprühkopf 53 die Leitungswandung 56 des zweiten Abschnitts 51 radial durchdringende Ausblaseöffnungen 57 auf, die gleichmäßig oder ungleichmäßig in einer Ebene liegend über den Umfang verteilt sind und über die das Gemisch vom Gemischführungskanal 52 in das Abgas des Abgassystems 23 eingeblasen werden kann. Normalerweise ist der Gemischführungskanal 52 bei dem Ausführungsbeispiel nach Figur 2 stromabwärts der Ausblaseöffnungen 57 verschlossen. Das radial aus den Ausblaseöffnungen 57 austretende Gemisch wird durch die Abgasströmung 48 in Richtung zum Katalysator 26 in Form eines Hohlkegels, der sich nahezu bis zur Wandung 37 erstreckt, über den gesamten Querschnitt der Abgasleitung 23 mitgenommen, wobei sich im Bereich der Längsachse 47 eine höhere Konzentration des Gemisches einstellt, als in der Nähe der Wandung 37. Eine derartige Konzentrationsverteilung ist erwünscht, da im Zentrum des Katalysators aufgrund höherer Temperaturen auch eine höhere Aktivität des Katalysators vorliegt. Zur Beeinflussung der Gemischkonzentration über den Querschnitt des Abgassystems 23 ist es vorteilhaft, stromaufwärts des Sprühkopfes 53 einen kegelförmigen Leitkörper 58 anzuordnen, der sich mit seinem größten Durchmesser nach stromabwärts erstreckt.

## Patentansprüche

1. Gemischabgabevorrichtung zur Einführung wenigstens eines Reduktionsmittels in ein Abgassystem (23) einer Brennkraftmaschine, mit einer ein Gemisch aus Luft und wenigstens dem einen Reduktionsmittel durch die Wandung (37) des Abgassystems (23) führenden und im Innern des Abgassystems (23) an einem Sprühkopf (53) endenden Gemischführungsleitung (38), in der ein Gemischführungskanal (52) ausgebildet ist, wobei die Gemischführungsleitung (38) einen ersten Abschnitt (46) hat, der sich quer zu einer in Abgasströmrichtung (48) verlaufenden Längsachse (47) des Abgassystems (23) erstreckt, und einen mit dem ersten Abschnitt (46) in Verbindung stehenden zweiten Abschnitt (51) hat, der konzentrisch zur Längsachse (47) des Abgassystems (23) sich in Abgasströmrichtung (48) erstreckt und wobei die Gemischführungsleitung (38) stromaufwärts mit einem das Gemisch aus Luft und dem wenigstens einen Reduktionsmittel dosierenden Gemischzumeßventil (21) in Verbindung steht, **dadurch gekennzeichnet, daß** zwischen der Gemischführungsleitung (38) und dem Gemischzumeßventil (21) ein in Richtung zu der Gemischführungsleitung (38) hin öffnendes Rückschlagventil (42) angeordnet ist und auf dem zweiten Abschnitt (51) stromaufwärts des Sprühkopfes (53) konzentrisch zur Längsachse (47) ein zur Beeinflussung der Gemischkonzentration kegelförmiger Leitkörper (58) mit seinem größten Durchmesser nach stromabwärts gerichtet angeordnet ist, wobei der größte Durchmesser des Leitkörpers (58) kleiner als der Querschnitt der Wandung (37) des Abgassystems (23) ist.

2. Gemischabgabevorrichtung nach Anspruch 1, **dadurch gekennzeichnet, daß** der am stromabwärtigen Ende des zweiten Abschnitts (51) vorgesehene Sprühkopf (53) eine konzentrisch zur Längsachse (47) des Abgassystems (23) verlaufende drosselnde Ausblaseöffnung (57) hat, deren Querschnitt geringer als der Querschnitt des Gemischführungskanals (52) ist.

## Claims

1. Mixture delivery device for introducing at least one reducing agent into an exhaust system (23) of an internal combustion engine, having a mixture-carrying line (38), which carries a mixture of air and at least the one reducing agent through the wall (37) of the exhaust system (23), ends at a spray head (53) in the interior of the exhaust system (23) and in which a mixture-carrying passage (52) is formed, the mixture-carrying line (38) having a first section (46), which extends transversely with respect to a longitudinal axis (47) of the exhaust system (23) running in the direction of flow (48) of the exhaust gas, and a second section (51), which is in communication with the first section (46) and extends concentrically with respect to the longitudinal axis (47) of the exhaust system (23), in the direction of flow (48) of the exhaust gas, and the mixture-carrying line (38) being in communication, in the upstream direction with a mixture-metering valve (21), which meters in the mixture of air and the at least one reducing agent, **characterized in that** a nonreturn valve (42), which opens in the direction of the mixture-carrying line (38), is arranged between the mixture-carrying line (38) and the mixture-metering valve (21), and a conical guide body (58) for influencing the mixture concentration is arranged, with its largest diameter directed downstream, on the second section (51), upstream of the spray head (53) and concentrically with respect to the longitudinal axis (47), the largest diameter of the guide body (58) being smaller than the cross section of the wall (37) of the exhaust system (23).

2. Mixture delivery device according to the Claim 1, **characterized in that** the spray head (53) which is provided at the downstream end of the second section (51) has a throttling blow-off opening (57), which runs concentrically with respect to the longitudinal axis (47) of the exhaust system (23) and the cross section of which is smaller than the cross section of the mixture-carrying passage (52).

## Revendications

1. Dispositif d'émission de mélange pour introduire au moins un agent réducteur dans un système de gaz d'échappement (23) d'un moteur à combustion interne, comprenant une conduite de mélange (38) pour un mélange d'air et d'au moins un agent réducteur, passant à travers la paroi (37) du système de gaz d'échappement (23) et se terminant à l'intérieur du système de gaz d'échappement (23) par une tête de pulvérisation (53), conduite dans laquelle est réalisé un canal de guidage de mélanges (52),
la conduite de mélange (38) ayant un premier segment (46) s'étendant transversalement à l'axe longitudinal (47) du système de gaz d'échappement, dans la direction d'écoulement (48) des gaz d'échappement et un second segment (51) en communication avec le premier segment (46), qui s'étend concentriquement à l'axe longitudinal (47) du système de gaz d'échappement (23) dans la direction d'écoulement des gaz d'échappement (48), et la conduite de guidage de mélange (38) étant reliée en aval avec une soupape de dosage de mélange (21) qui dose le mélange d'air et d'au moins un agent réducteur,
**caractérisé en ce qu'**
entre la conduite de mélange (38) et la soupape de dosage de mélange (21) il est prévu un clapet anti-retour (42) s'ouvrant dans la direction de la conduite de mélange (38) et
sur le second segment (51) en amont de la tête de pulvérisation (53), concentriquement à l'axe longitudinal (47) on a un organe de guidage (58) de forme conique, pour influencer la concentration du mélange, et dont le plus grand diamètre est dirigé vers l'aval, ce plus grand diamètre de l'organe de guidage (58) étant inférieur à la section de la paroi (37) du système de gaz d'échappement (23).

2. Dispositif de distribution de mélange selon la revendication 1,
**caractérisé en ce que**
la tête de pulvérisation (53) prévue à l'extrémité aval du second segment (51) comporte un orifice de soufflage (57) à étranglement, concentrique à l'axe longitudinal (47) du système de gaz d'échappement (23) et dont la section est inférieure à celle du canal de guidage de mélange (52).
